# EUROPEAN PATENT SPECIFICATION

(11) **EP 1 769 670 B1**
(45) Date of publication and mention of the grant of the patent: **22.06.2011**
(21) Application number: 06120505.0
(22) Date of filing: 12.09.2006
(51) Int. Cl.: A01D 61/04, A01D 61/00, B65G 19/22

(54) **A conveyor assembly for a feeder house for a grain harvesting combine having a pivoting mid-floor**
Förderer mit einem schwenkbar gelagerten Zwischenboden für einen Mähdrescher
Transporteur avec un plancher intermédiaire pivotant pour une moissoneuse-batteuse

(30) Priority: 28.09.2005 US 721326 P; 08.02.2006 US 350146; 17.02.2006 US 357345
(43) Date of publication of application: 04.04.2007
(73) Proprietor: Deere & Company, Moline, IL 61265-8098 (US)
(72) Inventor: Ramp, Benjamin, Geneseo, IL 61254 (US); Schreader, John, Geneseo, IL 61254 (US); Payne, Mark, Port Byron, IL 61275 (US); Frana-Guthrie, Rebecca, Coal Valley, IL 61240 (US); Wardlow, Steven, Milan, IL 61264 (US); Melton, Mark, Erie, IL 61250 (US); Hogue, Jeffrey, Geneseo, IL 61254 (US)
(74) Representative: Holst, Sönke

(56) References cited:
- WO-A-02/087312
- DE-C1- 19 631 684
- FR-A- 2 172 634
- GB-A- 852 471
- US-A- 3 699 753
- US-A- 3 780 851

## Description

This invention relates to a conveyor assembly for a feeder house for a grain harvesting combine, the conveyor assembly comprising:
a transverse drum at a front of the conveyor assembly, the drum having a shaft; drive sprocket means at a rear of the conveyor assembly;
chains longitudinally disposed over and driven by the drive sprocket means and
disposed over and carried by the transverse drum;
chain slats mounted between the chains, the slats positioned parallel to the transverse drum.

Such an assembly is known from DE-C-196 31 684, which is provided with a fixed midfloor located between the transverse drum and fixed sprocket.

Combines are large self-propelled vehicles used for harvesting and threshing agricultural crop in a field. A combine operates by cutting or gathering crop standing in a field, and feeding the cut crop to a separator by means of a conveyor assembly contained in a mechanism known as a feeder house. In the separator, grain is threshed, or beaten from the husk, stems, pods, or cobs, and then the threshed grain is separated from crop material other than grain. The cleaned grain is moved to a grain tank, and the crop material other than grain is generally distributed back out on the field behind the combine, or collected for use as animal feed or bedding.

The feeder house comprises a housing that is mounted to the front of the combine and from which the harvesting assembly is mounted. The interior of the feeder house is provided with a conveyor for conveying the harvested crop material upwardly and rearwardly into the separator mechanism. Typically, the conveyors have a plurality of continuous chains that are arranged to revolve around a transverse drum at the front of the feeder house and transverse sprocket means at the rear of the feeder house, with a device, some times referred to as a mid-floor, located between the drum and sprocket means to provide structural support for the chains in the area between the two mechanisms, the chains rotating generally in the direction of the length of the combine.

A surge in volume of crop material entering the feeder house from the harvesting mechanism can place a large amount of pressure on the conveyor chain assembly, forcing the chain against fixed portions of the feeder house, conveyor assembly, and/or mid-floor, resulting in increased friction on the chain, which can cause premature chain wear and loss of lubrication through heating and evacuation. Additionally, the pressure on the chain can slow down the conveyor system in order to accommodate processing the volume of crop material, resulting in an increase in drive torque. This change in processing speed causes additional wear on the chain and drive components, and can lead to inefficient processing of crop material. In some situations, if a large volume of material becomes lodged in the feeder house, the system can stall, necessitating the system be shut down and the excess material removed.

Therefore, what is needed is a system that reduces combine feeder house component wear and operation load without the need to reduce operating speed of the combine so that crop intake volume and crop processing efficiency are not reduced, without crop loss or feeder house plugs occurring.

It is an object of the present invention to provide a simple and effective throughput control system for an agricultural combine that reduces wear on the feeder house components without having to reduce the harvesting operation speed.

This object is achieved by the subject matter of claim 1. The dependent claims disclose advantageous embodiments.

The invention comprises a conveyor assembly for a combine feeder house having a transverse drum mounted on a shaft at a front end thereof, sprocket drive means at a rear end thereof, a pivoting mid-floor located between the transverse drum and sprocket drive means, and chains disposed over and around the transverse drum and sprocket drive means for guiding crop material through the combine feeder house. The pivoting mid-floor comprises a plurality of guides longitudinally oriented between and connected to a front cross-member and a rear pivot rod. The front cross-member of the pivoting mid-floor is coupled with the drum by means of a drum arm affixed to the front cross member at a rear end and the shaft of the transverse drum at front end, the drum arm capable of moving the pivoting mid-floor in a substantially vertical direction when pressure is applied to the top or bottom of the mid-floor.

The present invention hence utilizes a pivoting mid-floor section located between the transverse drum and the transverse sprocket means. The pivoting mid-floor is an improvement over the previous fixed mid-floor devices in that the mid-floor can pivot or adjust when a large glut of material is being fed into the feeder house, thus reducing the friction on the chain, reducing the torque required to operate the system, and preventing the system slow downs that occurred in feeder house systems using a fixed mid-floor.

Additionally, replaceable wear-resistant, low-friction wear pads can be affixed to the contact surfaces of the runners or guides of the mid-floor or to the underside of the slats to further extend wear life and reduce friction between the chain slats and the mid-floor. The contact occurs between the wear pads and the conveyor parts, rather than between the chain components and the conveyor parts, reducing chain wear and friction heat.

Between the front cross-member and the drum, preferably an adjustment mechanism having an adjustment arm for setting a proper chain tension is provided.

A preferred embodiment of the invention is shown in the drawings, in which:
Fig. 1 is a partially cut-away side view of a combine;
Fig. 2 is a partially cut-away side view of a feeder house shown with a fixed mid-floor mechanism of the prior art;
Fig. 3 is a perspective view of a conveyor assembly utilizing a pivoting mid-floor device of the present invention;
Fig. 4 is a perspective view of a pivoting mid-floor device of the present invention;
Fig. 5A is a representative side view of a prior art conveyor assembly in normal operating position;
Fig. 5B is a representative side view of a prior art conveyor assembly processing a large volume of crop material;
Fig. 6A is a representative side view of a conveyor assembly of the present invention in normal operating position; and
Fig. 6B is a representative side view of a conveyor assembly of the present invention processing a large volume of crop material.

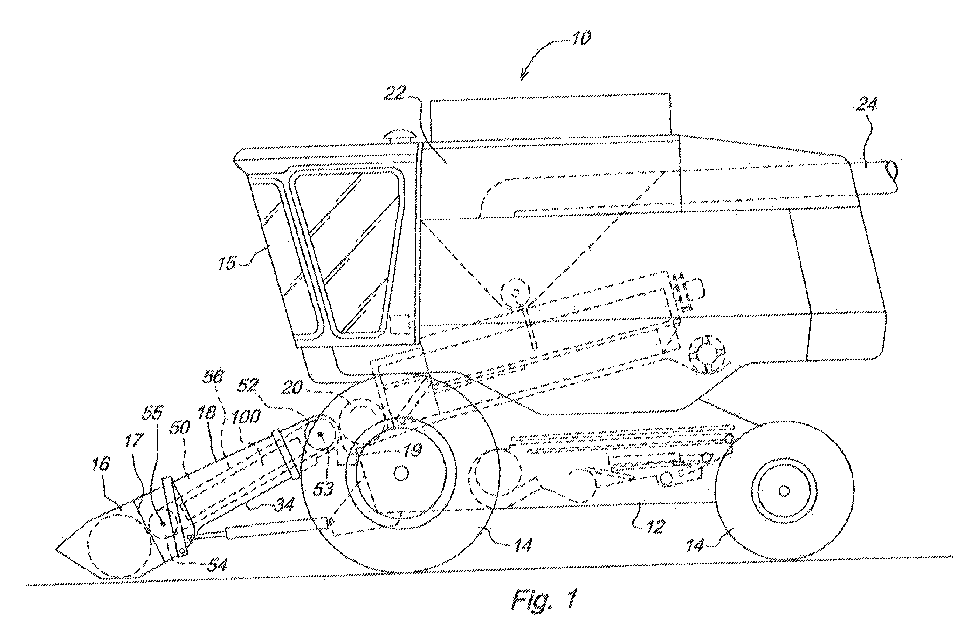

FIG. 1 shows a combine 10 used for harvesting agricultural crops. The combine 10 comprises a supporting structure 12 having ground-engaging wheels 14 extending from the supporting structure 12. The operation of the combine 10 is controlled from the operator's cab 15. A harvesting platform 16 is used for harvesting a crop bearing grain. The cut crop is directed to a crop inlet 17 at a front of a feeder house 18. The crop is directed upwardly and rearwardly through the feeder house 18, then out a rear opening 19 in the feeder house 18 to the separator mechanism 20 which threshes the grain from the crop material. Once the grain has been separated from the crop material, it is fed into a grain tank 22, and is ultimately unloaded from the combine 10 by means of the unloading auger 24 into other transport or storage mechanisms.

The feeder house 18 contains a conveyor assembly 50 used to convey the crop material through the feeder house 18. The conveyor assembly 50 includes rear drive sprocket means 52 in the rear portion of the feeder house 18, near the separator mechanism 20, a transverse drum 54 mounted on a shaft 55, adjacent to the forward end of the feeder house 18, conveyor chains 56 which are entrained around the rear drive sprockets 52 and the front transverse drum 54, with slats 60 connected across adjoining chains 56, and a mid-floor 100 of the present invention, which is used to provide structure and support to the conveyor assembly 50. The rear drive sprockets 52 are mounted on a shaft 53 which is driven from a power source (not shown) on the combine 10. The feeder house 18 also has an upwardly and rearwardly inclined bottom floor 34.

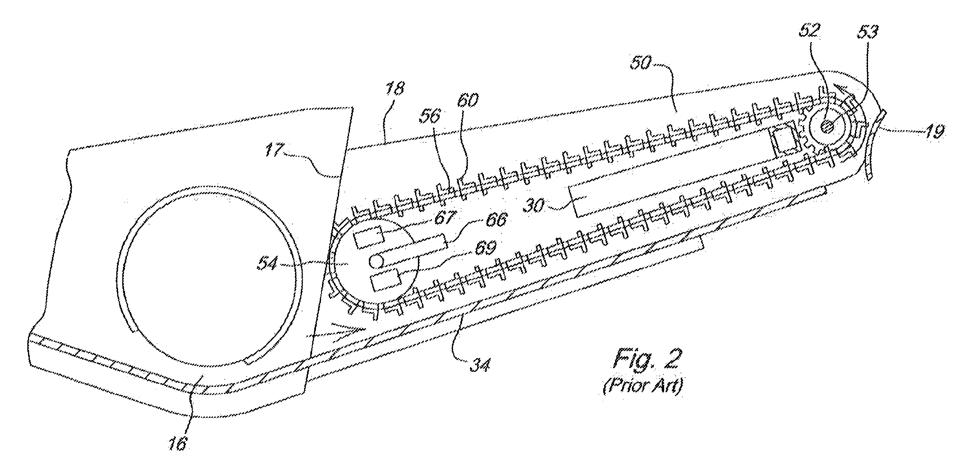

FIG. 2 shows a typical feeder house 18 and conveyor assembly 50 of the prior art. In operation, the feeder house 18 has an crop inlet 17 at the front thereof to accept crop from the harvesting platform 16, with crop material being pulled upwardly and rearwardly through the feeder house 18 by being processed between the slats 60 attached thereon of the underside or lower run of the conveyor chain 56 and the bottom floor 34. The crop material is delivered through an opening 19 at the rear of the feeder house 18, and the chains 56 and attached slats 60 continue to rotate in the feeder house 18, now frontwardly and downwardly toward the front of the feeder house 18 to receive more crop material after rotating around the transverse drum 54 and once again moving upwardly and rearwardly. In prior art conveyor assembly 50, as shown in FIG. 2, the mid-floor 30, is fixed or stationary, and positioned at some distance to the rear of the transverse drum 54, leaving the chains 56 unsupported over a portion of their length during operation. Typically, a pivoting drum arm 66 was connected to the shaft 55 that runs through the length of the transverse drum 54, although in some prior art conveyor assemblies, no pivoting drum arm 66 was used. When a pivoting drum arm 66 was used, upper and lower drum stops, 67, 69 were connected to the end of the transverse drum 54.

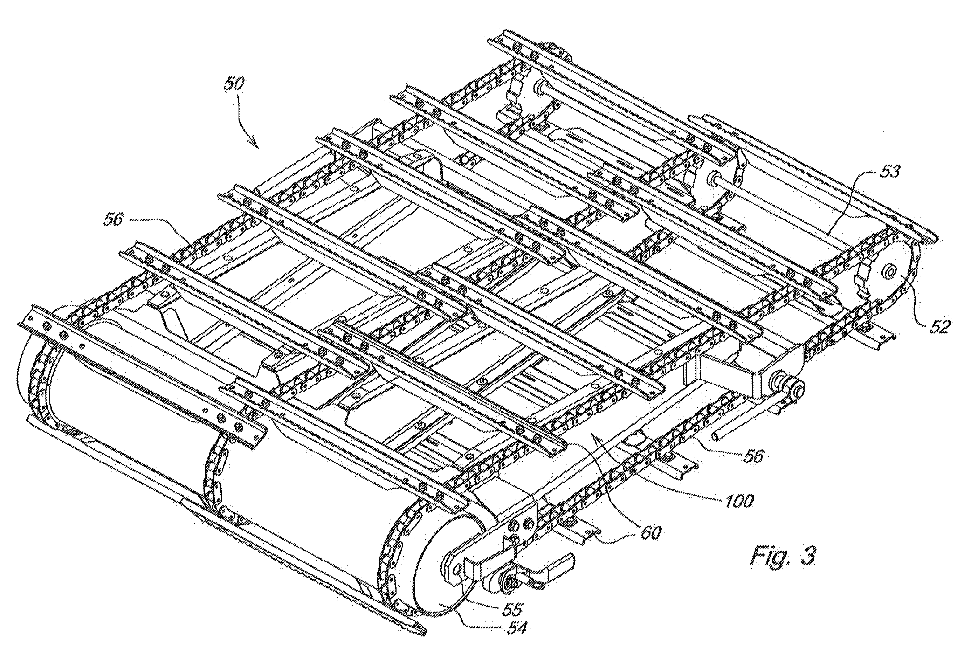

FIG. 3 shows a conveyor assembly 50 of the present invention, The conveyor assembly 50 includes rear drive sprocket means 52 mounted on a shaft 53 which is driven from a power source (not shown) on the combine 10, a front transverse drum 54 mounted on an shaft 55, conveyor chains 56 which are longitudinally entrained around the rear drive sprockets 52 and the front transverse drum 54, chain slats 60 attached to the conveyor chains 56, and a pivoting mid-floor 100 which is used to provide structure and support to the conveyor assembly 50. As can be seen, the pivoting mid-floor 100 extends almost the entire length of the conveyor 50 between the front transverse drum 54 and the rear drive sprocket means 52, providing support to the chains 56 and slats 60 along substantially the entire length of operation, as opposed to the prior art mechanism, in which a substantial gap existed between the front transverse drum 54 and the mid-floor 30.

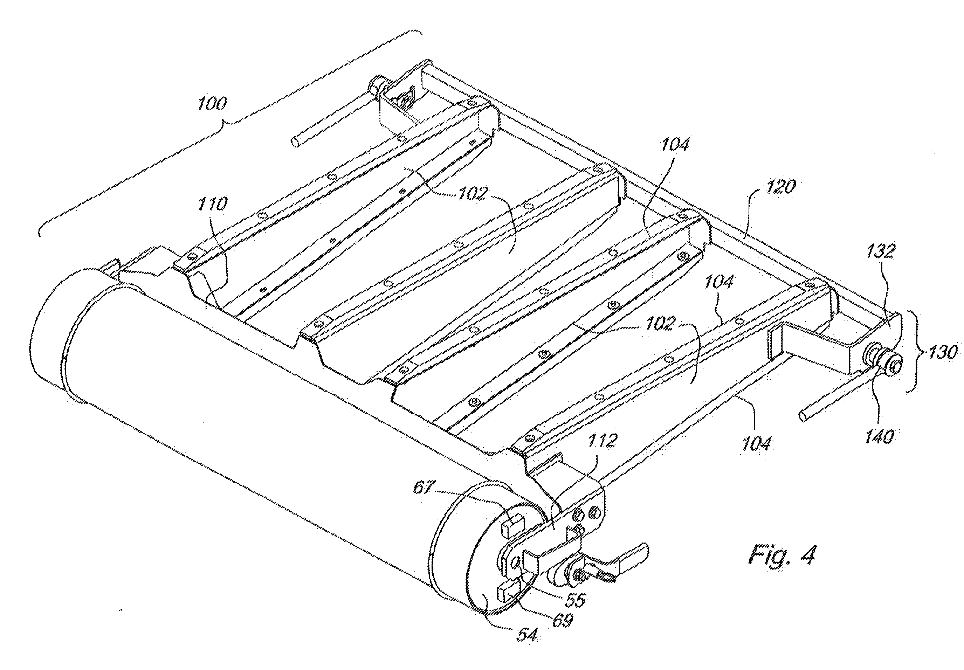

As can be seen in FIG. 4, the pivoting mid-floor 100 is comprised of a series of longitudinal guides 102, which are tied to a front cross-member 110 and a rear pivot rod 120. A drum arm 112 is linked to the shaft 55 at a front end thereof, and to the front cross-member 110 at a rear end thereof. The movement from the shaft and transverse drum 54 is relayed to the mid-floor 100 by means of the drum arm 112. This movement enables the pivoting mid-floor 100 to pivot about the rear pivot rod 120 in response to crop being processed through the conveyor assembly 50. When a large volume of material passes through the conveyor assembly 50, the transverse drum 54 experiences greater movement. This movement is transferred to the pivoting mid-floor 100 via the drum arm 112, which pivots upward to the limit of the upper drum stop 67, enabling the mid-floor 100 to pivot.

Additionally, the pivoting mid-floor 100 has an adjustment mechanism 130 with an adjustment arm 132, which is used to adjust the position of the pivoting mid-floor 100 fore and aft in the feeder house 18 to maintain chain tension for optimal performance. Incorporated into the adjustment mechanism 130 is a spring-gauge tensioning mechanism 140. The spring gauge tensioning mechanism 140 allows the operator to adjust for and maintain consistent tension on the chains 56. This mechanism also allows the pivoting mid-floor 100 to react to a sudden large volume of material by allowing some relief of the chain tension, thus removing the instantaneous tensile loads on the chain 56. Because the pivoting mid-floor 100 is made from a series of guides 102, rather than being a single solid piece, it provides structure and rigidity, and can cover substantially the entire length of the area between the transverse drum 54 and rear drive sprockets 52 without any unnecessary increase in the over all weight of the structure. However, because the drum 54 and mid-floor 100 move together as a unit, the weight of both the drum 54 and the pivoting mid-floor 100 are used in controlling the flow of the crop, as opposed to prior art units where just the drum weight worked to control crop flow. This ability to apply greater weight for control of crop flow without having to add to the total weight of the feeder house 18 is an improvement over the prior art. By being able to apply additional weight to the crop mat, it is easier to break up the mat, and provide smoother feeding overall.

In the arrangement shown in FIG. 3, the chain slats 60 are of a configuration such that the rear side of the chain slats 60 contact the guides 102. However, other combines are configured so that the chain 56 would come in contact with the pivoting mid-floor 100. The pivoting drum arm 112 is rigidly mounted to the pivoting mid-floor 100 such that the entire pivoting mid-floor assembly 100 moves and pivots together, reacting like a drum arm that extends the full length of the feeder house 18.

In one arrangement of the present invention, replaceable wear pads 104 made of a wear-resistant low-friction material are incorporated into the conveyor assembly 50 to further prolong like of the devices. In one arrangement of the present invention, the replaceable wear pads 104 are secured to the top and/or bottom surfaces of the guides 102 for extended wear life. In another arrangement of the present invention, replaceable wear pads 104 are secured to the underside of the chain slats 60 in the area that contacts the guides 102. In operation, as the chains 56 and attached chain slats 60 travel through the feeder house 18, there are pads 104 of wear resistant material between the slats 60 and the guides 102. This layer of wear-resistant material placed between the moving parts reduces friction in the chain 56, which reduces heating that occurs when the chain 56 directly contacts metal surfaces, as in prior art mechanisms. This friction caused chain link wear, and caused the chain lubrication to heat up and evacuate from the chain 56, resulting in premature chain wear and failures.

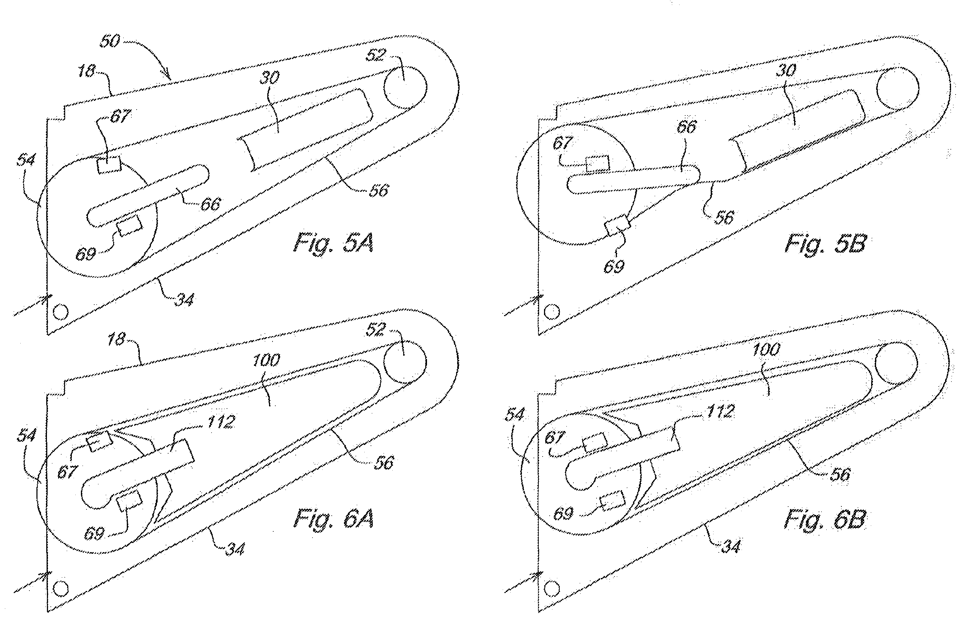

As can be seen in FIG. 5A, in the prior art conveyor assembly 50, crop material flows into the feeder house 18 between the bottom floor 34 and the chain 56 and chain slats (not shown) and is fed towards the rear of the feeder house 18. The transverse drum 54 shown in this arrangement of the prior art conveyor assembly has a pivoting drum arm 66 and top and bottom drum stops, 67, 69. The mechanism has a stationary mid-floor 30, which is positioned some distance behind the transverse drum 54. When the chain 56 and attached slats rotate around the drive sprockets 52 and front transverse drum 54, the chain 56 is suspended between the two in the space there between in the area of the mid-floor 30. In normal operation, the drum arm 66 would be positioned against the lower drum stop as shown in FIG. 5A.

When there was a large volume of crop material being moved through the feeder house 18, as shown in FIG 5B, the pivoting drum arm 66 would move up to allow the chain 56 and chain slats (not shown) to move upwards, so the larger volume of material could pass between the bottom floor 34 and the chain 56. However, if too large a volume of material was processed, the pivoting drum arm 66 would move upwards until it came in contact with the top drum stop 67, as shown in FIG. 5B. Pressure from the large volume of crop material would continue to press against the chain 56, bringing the inside of the chain 56 in contact with the stationary mid-floor 30, which would cause chain friction and heating, and consequent loss of lubrication and chain wear.

In contrast, in the present invention, as can be seen in FIG. 6A, crop material flows into the feeder house 18 between the bottom floor 34 and the chain 56 and chain slats 60 and is fed towards the combine body 10, just as in the prior art. The transverse drum 54 shown in this arrangement of the prior art conveyor assembly has a top and bottom drum stops, 67, 69, and a drum arm 112 that is affixed to the shaft 55 of the transverse drum 54 at a front end thereof, with the rear end of the drum arm 112 being tied into the pivoting mid-floor 100. When the chain 56 and attached slats (not shown) rotate around the drive sprockets 52 and front transverse drum 54, the chain is suspended between the two in the space there between in the area of the pivoting mid-floor 100, which provides support along substantially the entire length of the chain. In normal operation, the drum arm 112 is positioned against the lower drum stop 69 as shown in FIG. 6A.

When a large volume of crop material is being moved through the feeder house 18, as shown in FIG 6B, the pivoting mid-floor 100 moves up to allow the chain 56 to move upwards, so the larger volume of material can pass between the bottom floor 34 and the chain 56. When the pivoting mid-floor 100 moves upward, and the attached drum arm 112 moves up until it comes up against the upper drum stop 67. This ability to move away provides extra space for the increased volume of incoming crop material without having to slow down the crop processing. Because the chain 56 is supported along substantially its entire length of travel by the pivoting mid-floor 100, however, there is not the problem with the chain 56 bending and giving way as in the prior art mechanisms. Additionally, in those arrangements of the present invention that have wear pads 104 between the pivoting mid-floor 100 and the chain slats (not shown), as shown in FIG. 4, the wear to moving parts is reduced because of the presence of this wear-resistant material, increasing life of the equipment, including the chain 56. Thus, the present invention serves the purposes of reducing friction and enabling uptake of the greater volume of crop material without the system slowing down because of the friction and stress on the chain 60.

## Claims

1. A conveyor assembly (50) for a feeder house (18) for a grain harvesting combine (10), the conveyor assembly (50) comprising:
a transverse drum (54) at a front of the conveyor assembly (50), the drum (54) having an shaft (55);
drive sprocket means (52) at a rear of the conveyor assembly (50);
chains (58) longitudinally disposed over and driven by the drive sprocket means (52) and disposed over and carried by the transverse drum (54);
chain slats (80) mounted between the chains (58), the slats (80) positioned parallel to the transverse drum (54);
**characterized by** a pivoting mid-floor (100) located between the transverse drum (54) and the drive sprocket means (52), the pivoting mid-floor (100) having longitudinal guides (102) connected between a front cross-member (110) and a rear pivot rod (120),
wherein a drum arm (112) is connected to the shaft (55) of the transverse drum (54) at a front end and to the front cross-member (110) of the pivoting mid-floor (100) at a rear thereof by means of a fixed joint; and
the mid-floor (100) is capable of pivoting about the rear pivot rod (120).

2. The conveyor assembly (50) according to claim 1, **characterized in that** the drum arm (112) is located between upper and lower drum stops (67, 69) that limit the range of pivoting of the mid-floor (100) and the attached drum arm (112).

3. The conveyor assembly (50) according to claim 1 or 2, **characterized in that** wear pads (104) made of a wear-resistant material are affixed to the under side and/or upper side of the longitudinal guides (102) of the pivoting mid-floor (100).

4. The conveyor assembly (50) according to one of claims 1 to 3, **characterized in that** wear pads (104) made of a wear-resistant material are affixed to at least a portion of an underside of the chain slats (80).

5. The conveyor assembly (50) according to claim 3 or 4, **characterized in that** the wear-resistant material is low-friction.

6. The conveyor assembly (50) according to one of claims 1 to 5, **characterized by** a mechanism (130) for adjusting the position of the pivoting mid-floor (100) fore and aft to adjust chain tension.

7. The conveyor assembly (50) according to claim 6, **characterized in that** the adjustment mechanism (130) incorporates a spring-gauge tensioning mechanism (140) for adjusting chain tension.

8. A feeder house (18) with a conveyor assembly (50) according to one of the preceding claims.

9. A combine (10) with a feederhouse (18) according to claim 8.

## Patentansprüche

1. Förderanordnung (50) für ein Fördergehäuse (18) für einen Mähdrescher (10) zur Getreideernte, wobei die Förderanordnung (50) Folgendes umfasst:
eine Quertrommel (54) vorne an der Förderanordnung (50), wobei die Trommel (54) eine Welle (55) aufweist;
Antriebskettenradmittel (52) hinten an der Förderanordnung (50);
Ketten (58), die in Längsrichtung auf den Antriebskettenradmitteln (52) angeordnet sind und von diesen angetrieben werden und auf der Quertrommel (54) angeordnet sind und von dieser getragen werden;
Kettenstäbe (80), die zwischen den Ketten (58) angebracht sind, wobei die Kettenstäbe (80) parallel zur Quertrommel (54) positioniert sind;
**gekennzeichnet durch** einen schwenkbaren Zwischenboden (100), der zwischen der Quertrommel (54) und den Antriebskettenradmitteln (52) positioniert ist, wobei der schwenkbare Zwischenboden (100) Längsführungen (102) aufweist, die zwischen einem vorderen Querträger (110) und einer hinteren Schwenkstange (120) verbunden sind,
wobei ein Trommelarm (112) mit der Welle (55) der Quertrommel (54) an einem vorderen Ende und dem vorderen Querträger (110) des schwenkbaren Zwischenbodens (100) an einem hinteren Ende davon mittels eines Festgelenks verbunden ist; und
der Zwischenboden (100) um die hintere Schwenkstange (120) schwenken kann.

2. Förderanordnung (50) nach Anspruch 1, **dadurch gekennzeichnet, dass** der Trommelarm (112) zwischen einem oberen und einem unteren Trommelanschlag (67, 69) positioniert ist, die den Schwenkbereich des Zwischenbodens (100) und des befestigten Trommelarms (112) begrenzen.

3. Förderanordnung (50) nach Anspruch 1 oder 2, **dadurch gekennzeichnet, dass** aus einem verschleißfesten Material hergestellte Verschleißauflagen (104) an der Unterseite und/oder Oberseite der Längsführungen (102) des schwenkbaren Zwischenbodens (100) befestigt sind.

4. Förderanordnung (50) nach einem der Ansprüche 1 bis 3, **dadurch gekennzeichnet, dass** die aus einem verschleißfesten Material hergestellten Verschleißauflagen (104) mindestens an einem Teil der Unterseite der Kettenstäbe (80) befestigt sind.

5. Förderanordnung (50) nach Anspruch 3 oder 4, **dadurch gekennzeichnet, dass** das verschleißfeste Material reibungsarm ist.

6. Förderanordnung (50) nach einem der Ansprüche 1 bis 5, **gekennzeichnet durch** einen Mechanismus (130) zur Einstellung der Längsposition des schwenkbaren Zwischenbodens (100) zwecks Einstellung der Kettenspannung.

7. Förderanordnung (50) nach Anspruch 6, **dadurch gekennzeichnet, dass** der Einstellmechanismus (130) einen Federlehren-Spannmechanismus (140) zur Einstellung der Kettenspannung enthält.

8. Fördergehäuse (18) mit einer Förderanordnung (50) nach einem der vorhergehenden Ansprüche.

9. Mähdrescher (10) mit einem Fördergehäuse (18) nach Anspruch 8.

## Revendications

1. Transporteur (50) pour un caisson d'alimentation (18) pour une moissonneuse-batteuse (10), le transporteur (50) comprenant :
un tambour transversal (54) à l'avant du transporteur (50), le tambour (54) ayant un arbre (55) ;
des moyens de roues d'entraînement (52) à l'arrière du transporteur (50) ;
des chaînes (58) disposées longitudinalement par-dessus les moyens de roues d'entraînement (52) et entraînées par ceux-ci, et disposées par-dessus le tambour transversal (54) et soutenues par celui-ci ;
des lames de chaîne (80) montées entre les chaînes (58), les lames (80) étant positionnées parallèlement au tambour transversal (54) ;
**caractérisé par** un plancher intermédiaire pivotant (100) situé entre le tambour transversal (54) et les moyens de roues d'entraînement (52), le plancher intermédiaire pivotant (100) ayant des guides longitudinaux (102) connectés entre une traverse avant (110) et une barre de pivotement arrière (120),
un bras de tambour (112) étant connecté à l'arbre (55) du tambour transversal (54) à une extrémité avant et à la traverse avant (110) du plancher intermédiaire pivotant (100) à l'arrière de celui-ci au moyen d'une articulation fixe ; et
le plancher intermédiaire (100) étant en mesure de pivoter autour de la barre de pivotement arrière (120).

2. Transporteur (50) selon la revendication 1, **caractérisé en ce que** le bras de tambour (112) est situé entre des butées de tambour supérieure et inférieure (67, 69) qui limitent la plage de pivotement du plancher intermédiaire (100) et du bras de tambour rattaché (112).

3. Transporteur (50) selon la revendication 1 ou 2, **caractérisé en ce que** des patins d'usure (104) fabriqués en matériau résistant à l'usure sont fixés au côté inférieur et/ou au côté supérieur des guides longitudinaux (102) du plancher intermédiaire pivotant (100).

4. Transporteur (50) selon l'une quelconque des revendications 1 à 3, **caractérisé en ce que** des patins d'usure (104) fabriqués en matériau résistant à l'usure sont fixés à au moins une portion d'un côté inférieur des lames de chaîne (80).

5. Transporteur (50) selon la revendication 3 ou 4, **caractérisé en ce que** le matériau résistant à l'usure est à faible friction.

6. Transporteur (50) selon l'une quelconque des revendications 1 à 5, **caractérisé par** un mécanisme (130) pour ajuster la position du plancher intermédiaire pivotant (100) à l'avant et à l'arrière pour ajuster la tension de la chaîne.

7. Transporteur (50) selon la revendication 6, **caractérisé en ce que** le mécanisme d'ajustement (130) comprend un mécanisme tendeur à jauge à ressort (140) pour ajuster la tension de la chaîne.

8. Caisson d'alimentation (18) comprenant un transporteur (50) selon l'une quelconque des revendications précédentes.

9. Moissonneuse-batteuse (10) comprenant un caisson d'alimentation (18) selon la revendication 8.
